# EUROPEAN PATENT APPLICATION

(11) **EP 2 169 546 A1**
(43) Date of publication of application: **31.03.2010**
(21) Application number: 09170673.9
(22) Date of filing: 18.09.2009
(51) Int. Cl.: G06F 9/445

(54) **Information processor, external memory and control method**

(30) Priority: 25.09.2008 JP 2008246609
(71) Applicant: The Bizser Co. Ltd., Chiyoda-ku Tokyo 101-0021 (JP)
(72) Inventor: Hirose, Michitoshi, Tokyo 101-0021 (JP)
(74) Representative: Viering, Jentschura & Partner

(57) **Abstract**

An information processor includes a system control unit configured to start up one operating system, a drive unit configured to be driven in response to start-up of the one operating system, an external memory storing another operating system, and an interface (I/F) for the external memory which is connected to the external memory. The system control unit serves to stop the drive unit by being connected to the I/F for the external memory and to start up the other operating system from the external memory.

## Description

### BACKGROUND OF THE INVENTION

### Field of the Invention

The present invention relates to an information processor or information processing device utilizing an external memory.

### Related Art

A generally used personal computer (PC) terminal serves to boot an operating system (OS) stored in an internal memory (HDD) installed in the PC from a main memory to thereby perform a predetermined information processing operation.

Further, in a communication system, there exists a method of storing necessary application program or predetermined OS in a CD-ROM and booting the OS at the predetermined PC terminal for the purpose of improving security and preventing information from leaking, for example, as disclosed in Japanese Patent Application Laid-open Publication No. 2007-79613 (Patent Document 1).

However, in the communication system mentioned above, when function of a computer is limitedly used, there exists a device which is not used at all (for example, internal memory device). Such device, nevertheless, consumes electric power and generates heat, thus being inconvenient.

### SUMMARY OF THE INVENTION

The present invention was conceived in consideration of the circumstances mentioned above, and an object of the present invention is to provide an information processor system capable of improving security as well as achieving electric power saving.

This and other objectives can be achieved according to the present invention by providing an information processing device comprising:
a system control unit configured to start up one operating system;
a drive unit configured to be driven in response to the start-up of the one operating system;
an external memory storing another operating system; and
an interface (I/F) for the external memory which is connected to the external memory,
wherein the system control unit serves to stop the drive unit by being connected to the I/F for the external memory and to start up the another operating system from the external memory.
   In a preferred embodiment, it may be desired that the system control unit serves to stop power supply to the drive unit in accordance with an unnecessary device operation stop demand from the external memory, and to start up the another operating system from the external memory.
   It may be also desired that the information processing device further includes a memory unit configured to store content of working data just before the stopping of the drive unit, wherein the system control unit serves to store the content of the working data into the memory unit before the stopping of the drive unit, and, after removing of the external memory from the I/F for the external memory, to drive the drive unit which has been once stopped in operation to thereby return the content of the working data.
   In another aspect of the present invention, there is also provided an external memory used for an information processing device which includes: a system control unit configured to start up one operating system; a drive unit configured to be driven in response to start-up of the one operating system; and an interface (I/F) for an external memory which is connected to the external memory,
   wherein the external memory is preliminarily stored with another operating system, and the system control unit serves to stop the drive unit by being connected to the I/F for the external memory and to start up the another operating system from the external memory.
   In a further aspect of the present invention, there is also provided a control method for an information processing device which includes: a system control unit configured to start up one operating system; a drive unit configured to be driven in response to start-up of the one operating system; an external memory storing another operating system; and an interface (I/F) for the external memory which is connected to the external memory,
   wherein the system control unit serves to stop the drive unit by being connected to the I/F for the external memory and to start up the another operating system from the external memory.
   According to the present invention of the characters mentioned above, it becomes possible to effectively improve security and to achieve the electric power saving.

The nature and further characteristic features will be made clearer from the following descriptions made with reference to the accompanying drawings.

### BRIEF DESCRIPTION OF THE DRAWINGS

In the accompanying drawings:
Fig. 1 shows a diagram illustrating one example of a schematic structure of an information processor according to the present invention;

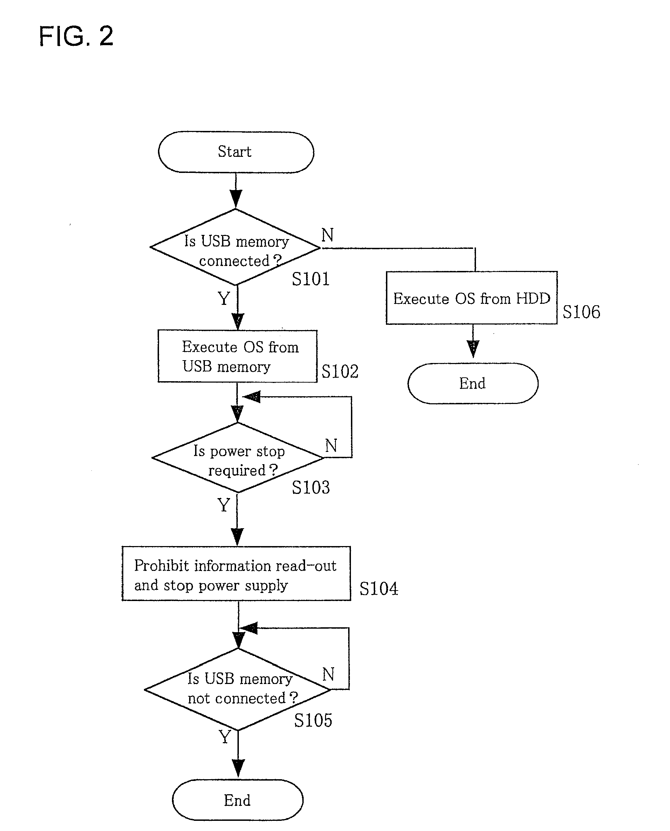

Fig. 2 shows a flowchart representing a sequence of one example of a control method of the information processor according to a first embodiment of the present invention; and
Fig. 3 shows a flowchart representing a sequence of one example of a control method of the information processor according to a second embodiment of the present invention.

### DESCRIPTION OF THE PREFERRED EMBODIMENT

A preferred embodiment of the present invention will be described hereunder with reference to the accompanying drawings.

### [Structure and Function of Information Processor]

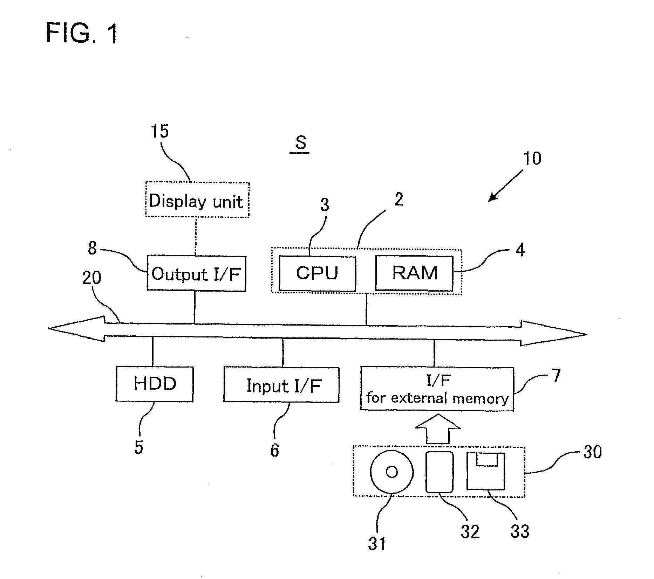

Structure and function of an information processor S according to an embodiment of the present invention will be first described with reference to Fig. 1.

As shown in Fig. 1, the information processor S includes a terminal 10 for client and a USB memory serving as an external memory of the terminal 10.

A generally used personal computer (PC) can be utilized as such terminal 10 for client. The terminal 10 includes a system control unit 2, a hard disk drive (HDD) serving as internal memory 5, an input I/F 6 connected to a key board, an I/F 7 connected to an external memory 30 such as a CD-ROM 31, a USB memory 32 and/or an FD 33, and an output I/F 8 connected to a display device 15 for displaying a designated information. These units or elements are electrically connected together through a system bus 20. Furthermore, although not shown, the terminal 10 for client is also provided with a power switch for starting and other various devices as occasion demands.

The system control unit 2 includes a CPU (central processing unit) 3 having an operating function as a computer and a RAM 4 serving as a main memory, and controls entire information processor S. The HDD 5 and the external memory 30 store program for executing respective processings (operating system (OS), application soft and so on), and the CPU 3 executes the program loaded from the HDD 5 or external memory 30 to the RAM 4 so that the computer serves as information processor S.

Furthermore, the external memory 30 issues power source stop demand of unnecessary device at the time of executing the OS by the system control unit 2. Herein, the unnecessary device means is a device that is not used at all at the time of starting up (i.e., booting up) the OS stored in the external memory 30.

The system control unit 2 serves to stop the supply of power to the unnecessary device (for example, such as HDD 5) upon reception of the power source stop demand. As a result, the unnecessary device is subjected to current conduction after the start-up of the OS, but is stopped in the power supply in response to the issue of the power source stop demand, thus saving the power consumption.

### [Embodiment 1 of Information Processor]

One embodiment of a control method using the information processor of the structure mentioned above will be described hereunder. It is further to be noted that in the following example, a USB memory 32 will be utilized for the explanation of one example of the external memory 30, and in the USB memory 32, program (OS or application soft) is preliminarily stored for various processings desired to be executed as information processor. Further, in a case when the external memory 30 is installed, it is preliminarily set that the processing of the external memory 30 can be executed prior to the processing of the internal memory device.

First, a power source for the terminal 10 for client is turned "ON" by a user so that the system control unit 2 judges whether the USB memory 32 is connected to the I/F7 for the external memory or not (step S101). In the case of "YES", the operation proceeds to the next step S102, and on the contrary, in the case of "NO", program for various processings from the HDD 5 is read out and executed (step S106), and then, the processing is ended.

Next, in the step S102, the system control unit 2 serves to read out the program for the various processings (OS and the like) stored in the USB memory 32 and RAM 4 and execute the program by the CPU 3.

At the time of executing the program for the various processings, the use condition of the software to be executed, the operation condition of the system, the load condition and so on are successively managed, and according to the use condition, an operation frequency (clock frequency) of the CPU 3 in the system control unit 2 is changed. More specifically, for example, when the system is detected to be in a waiting condition, a process to reduce the clock frequency is performed.

Next, in the step S103, the system control unit 2 is operated so as to judge whether the power stop demand to the unnecessary device (such as HDD 5) is received or not from the USB memory 32. In this step, in the case of "YES", the step progresses to the step S104, and on the contrary, in the case of "NO", it is waited as it is.

In the subsequent step S104, the system control unit 2 is operated so as to prohibit the read-out of the information (various programs) from the HDD 5 and to stop the power supply to the HDD 5.

Next, the system control unit 2 is operated so as to judge whether the USB memory 32 is removed from the I/F 7 for the external memory or not (step S105), and in the case of "YES", the processing is ended and in the case of "NO", it is waited till the USB memory 32 is removed from the I/F 7 for the external memory.

In this embodiment, the power supply to the HDD 5 is stopped upon the reception of the power stop demand from the USB memory 32 to the unnecessary device. However, the power supply to the HDD 5 may be stopped only by the judgement whether the USB memory 32 is connected to the I/F 7 for the external memory or not.

As mentioned above, in the present invention, the operating system (OS) is started up from the HDD (for example, USB memory 32) other than the HDD 5 installed to the terminal 10 for the client, and the management of the data using for processing after the starting of the OS is performed by the USB memory 32, so that the information can be prevented from leaking and the security can be improved. In addition, when the OS is started up by the USB memory 32, the unnecessary device (for example, HDD 5) during the start-up operation of the OS or after the start-up thereof is stopped (power supply stop demand), the power consumption can be reduced and the reduction of the discharged heat by the device can be reduced.

### [Embodiment 2 of Information Processor]

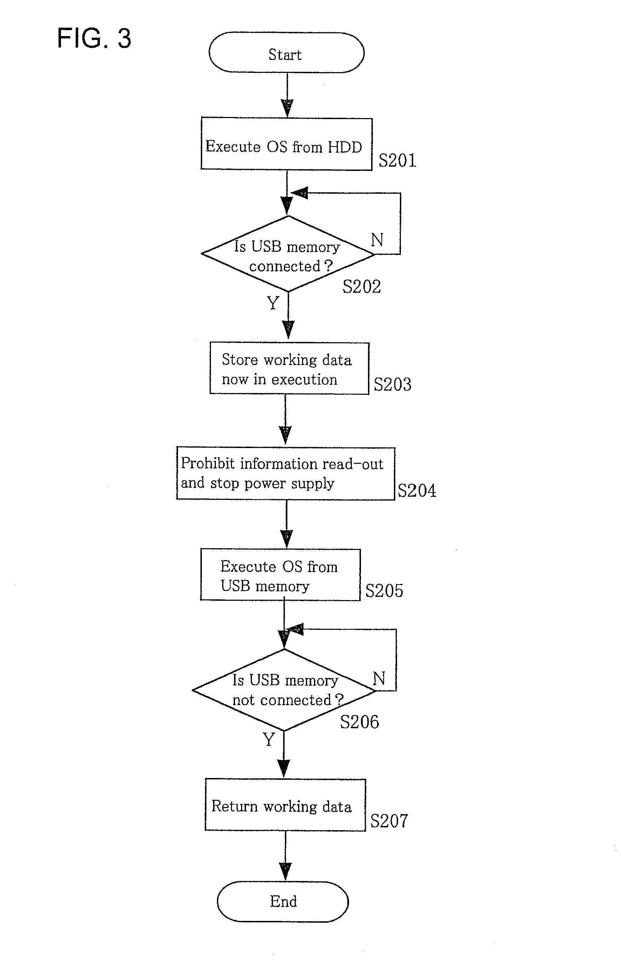

Hereunder, a modified embodiment of the control method for the information processor will be explained with reference to Fig. 3. Further, it is to be noted that the embodiment described hereinlater is a control method in a case where the USB memory 32 is inserted during the start-up of a computer by the predetermined OS.

First, in Fig. 3, when a user turns "ON" a power source of the client terminal 10, the system control unit 2 serves to execute the program for various processings loaded in the RAM 4 from the HDD 5 by using the CPU 3 (step S201).

Next, the system control unit 2 serves to judge whether the USB memory 32 is connected to the I/F 7 for the external memory during the execution of the program for the various processings or not (step S202). In this step S202, in the case of "YES", the step progresses to a the next step S203, and on the contrary, in the case of "NO", the system control unit 2 waits till the USB memory 32 is connected to the I/F 7 for the external memory.

In the next step S203, the system control unit 2 serves to store the working data now on execution into the HDD 5. This working data is the data necessary for re-starting up the computer for the processing now on execution.

In the next step S204, the system control unit 2 serves to prohibit the read-out of the designated information from the HDD 5 as well as to stop the power supply to the HDD 5.

In the next step S205, the system control unit 2 serves to read out the program for various processings (OS and the like) stored in the USB memory 32 to the RAM 4 and execute the program by the CPU 3. According to such processing, the user can perform the specific working in accordance with the application to be executed by the OS stored in the USB memory 32.

Next, the system control unit 2 serves to judge whether the USB memory is removed from the I/F 7 for the external memory (step 206). In this step S206, in the case of "YES", the step progresses to the step S206, and on the contrary, in the case of "NO", the system control unit 2 waits till the USB memory is removed from the I/F for the external memory.

In the next step S207, the system control unit 2 serves to start up the power supply to the HDD 5, and read out the working data for the returning from the HDD 5 to the RAM 4 to thereby carry out the execution by the CPU 3, thus ending the processing. According to such processing, the working data, which is once interrupted, can again returned to be executed.

As mentioned above, according to the present invention, even during the designated operation using the OS installed to the terminal 10 for the client, by only inserting the USB memory 32, the OS stored in the HDD 5 and the contents of the working data during the working is stopped to thereby prioritizing the start up the OS stored in the USB memory 32 and execute the specific working. Furthermore, after the ending of the specific working, by removing the USB memory 32, the working is returned to the content of the stopped working data. As a result, waste in time for again reading the OS from the HDD 5 can be prevented, thus being convenient and advantageous.

It is further to be noted that the present invention is not limited to the embodiment described above and many other changes and modifications may be made without departing from the scopes of the appended claims.

For example, CD-ROM 31 or FD 33 may be used in place of the USB memory 32.

Furthermore, in the described embodiment, although the Linux (registered Trademark) is utilized, another OS may be utilized.

## Claims

1. An information processing device comprising:
a system control unit configured to start up one operating system;
a drive unit configured to be driven in response to start-up of the one operating system;
an external memory storing another operating system; and
an interface (I/F) for the external memory which is connected to the external memory,
wherein the system control unit serves to stop the drive unit by being connected to the I/F for the external memory and to start up the another operating system from the external memory.

2. The information processing device according to claim 1
wherein the system control unit serves to stop power supply to the drive unit in accordance with an unnecessary device operation stop demand from the external memory, and to start up the another operating system from the external memory.

3. The information processing device according to claim 1, further comprising a memory unit configured to store content of working data just before the stopping of the drive unit, wherein the system control unit serves to store the content of the working data into the memory unit before the stopping of the drive unit, and, after removing of the external memory from the I/F for the external memory, to drive the drive unit which has been once stopped in operation to thereby return the content of the working data.

4. An external memory used for an information processing device which includes: a system control unit configured to start up one operating system; a drive unit configured to be driven in response to start-up of the one operating system; and an interface (I/F) for an external memory which is connected to the external memory,
wherein the external memory is preliminarily stored with another operating system, and the system control unit serves to stop the drive unit by being connected to the I/F for the external memory and to start up the another operating system from the external memory.

5. A control method for an information processing device which includes: a system control unit configured to start up one operating system; a drive unit configured to be driven in response to start-up of the one operating system; an external memory storing another operating system; and an interface (I/F) for the external memory which is connected to the external memory,
wherein the system control unit serves to stop the drive unit by being connected to the I/F for the external memory and to start up the another operating system from the external memory.
